# EUROPÄISCHE PATENTANMELDUNG

(11) **EP 4 831 074 A1**
(43) Veröffentlichungstag der Anmeldung: **28.10.2026**
(21) Anmeldenummer: 26170000.9
(22) Anmeldetag: 31.03.2026
(51) Int. Cl.: B65B 21/18, B25J 15/00, B65B 27/04, B65B 57/00, B65B 59/00, B65B 59/02, B65B 59/04, B65B 65/02, B65G 47/90, B65B 57/18

(54) **EIN- ODER AUSPACKMASCHINE UND VERFAHREN ZUM VORBEREITEN EINER EIN- ODER AUSPACKMASCHINE AUF EINEN DURCHZUFÜHRENDEN PACKPROZESS**

(30) Priorität: 24.04.2025 DE 102025115798
(71) Anmelder: Krones Aktiengesellschaft, 93073 Neutraubling (DE)
(72) Erfinder: DIETERSBERGER, Martin, 93073 Neutraubling (DE); FELLER, Simon, 93073 Neutraubling (DE); GABLER, Markus, 93073 Neutraubling (DE); RUHALTINGER, Christian, 93073 Neutraubling (DE); STADLER, Thomas, 93073 Neutraubling (DE)
(74) Vertreter: Benninger, Johannes

(57) **Zusammenfassung**

Es ist eine Ein- oder Auspackmaschine für Getränkebehälter offenbart. Die Ein- oder Auspackmaschine umfasst einen Greiferkopfträger (32) mit einer Linearführung, mindestens zwei Greiferköpfe (11, 12, 13, 14, 15, 16), die an der Linearführung angeordnet sind und jeweils mehrere Greifelemente für Getränkebehälter umfassen und einen Antrieb (38). Zudem umfasst die Ein- oder Auspackmaschine mindestens ein Kopplungsteil (40). Der eine Antrieb (38) ist zur Verschiebung eines bestimmten Greiferkopfes (13) entlang der Linearführung ausgebildet. Das mindestens eine Kopplungsteil (40) ist zum mechanischen Verbinden des bestimmten Greiferkopfes (13) mit mindestens einem weiteren Greiferkopf (11, 12, 14, 15, 16) ausgebildet, so dass der bestimmte Greiferkopf (13) den mindestens einen weiteren Greiferkopf (11, 12, 14, 15, 16) bei einer Verschiebung mitnimmt.

## Beschreibung

Die vorliegende Erfindung betrifft eine Ein- oder Auspackmaschine und ein Verfahren zum Vorbereiten einer Ein- oder Auspackmaschine auf einen durchzuführenden Packprozess.

Die automatisierte Entnahme von Getränkebehältern aus Getränkekisten erfolgt normalerweise, indem Getränkekisten zunächst über eine Horizontalfördereinrichtung in den Arbeitsbereich einer Entnahmemaschine transportiert werden. Diese Entnahmemaschine besitzt mehrere Greiferköpfe mit jeweils mehreren Greifelementen, erfasst über die Greifelemente sodann Getränkebehälter, die sich hierbei noch in einer jeweiligen Getränkekiste befinden, und setzt die gegriffenen Getränkebehälter an einer vorgegebenen Position ab. Jeder Getränkekiste ist hierbei ein eigener Greiferkopf zugeordnet, über dessen Greifelemente die Getränkebehälter einer jeweiligen Getränkekiste gegriffen werden. Die entnommenen Getränkebehälter können dann einer Reinigungsmaschine zugeführt und nach einer Reinigung erneut mit einem Getränk befüllt werden. Die leeren Getränkekisten werden über die Horizontalfördereinrichtung fortbewegt und ebenfalls gereinigt, so dass in diese nach ihrer Reinigung wieder Getränkebehälter eingebracht werden können.

Das automatisierte Einbringen von Getränkebehältern in Verpackungen erfolgt normalerweise, indem Getränkebehälter über eine Horizontalfördereinrichtung in den Arbeitsbereich einer Einpackmaschine transportiert werden. Diese Einpackmaschine greift sodann Getränkebehälter, die sich hierbei noch auf einer Horizontalfördereinrichtung befinden, und setzt die gegriffenen Getränkebehälter in die Verpackungen ein. Die eingesetzten Getränkebehälter können sodann mit der Verpackung einer weiteren Handhabung zugeführt werden. Für jede Verpackung besitzt die Einpackmaschine einen eigenen Greiferkopf, der die jeweiligen erfassten Getränkebehälter in die jeweilige Verpackung einbringt.

Verpackungen, aus denen Getränkebehälter entnommen werden oder Verpackungen, in welche Getränkebehälter eingebracht werden, können in der Praxis unterschiedliche Formate besitzen. Wenn Getränkebehälter in einem ersten Packprozess in Verpackungen eingebracht oder aus Verpackungen entnommen werden, die ein erstes Format besitzen, muss die relative Beabstandung der Greiferköpfe zueinander an das jeweilige Format angepasst werden. Wenn Getränkebehälter in einem zweiten Verpackungsprozess in Verpackungen eingebracht oder aus Verpackungen entnommen werden, die ein zweites Format besitzen, muss die relative Beabstandung der Greiferköpfe zueinander erneut an das jeweilige Format angepasst werden. Bekannt sind daher Einpackmaschinen und Auspackmaschinen, bei denen jedem Greiferkopf ein eigener Antrieb zugeordnet ist, wobei die Antriebe die Greiferköpfe in Abstimmung auf das jeweilige Format der für den jeweiligen Verpackungsprozess vorgesehenen Verpackungen relativ zueinander ausrichten. Häufig ist es zudem erforderlich, dass die Greiferköpfe gemeinsam eine lineare Bewegung ausführen, wenn die Greiferköpfe Getränkebehälter aus Verpackungen entnommen haben oder wenn über die Greiferköpfe Getränkebehälter in Verpackungen eingebracht werden. Solche Bewegungen erfolgen ebenso über mehrere Antriebe, welche den mehreren Greiferköpfen zugeordnet sind.

Da in der Praxis die Anzahl der Antriebe mit der Anzahl an Greiferköpfen übereinstimmt und da in der Praxis mehrere Greiferköpfe für eine solche Maschine notwendig sind, wären Ein- oder Auspackmaschinen wünschenswert, welche einen einfachen Aufbau besitzen und dennoch an die beschriebenen unterschiedlichen Verpackungsprozesse angepasst werden können. Wenn einzelne Komponenten einer solchen Maschine repariert oder gewartet werden müssen, kann es sein, dass die Maschine für solche Arbeiten schwer zugänglich ist. Wünschenswert wären somit Maschinen, bei denen die einzelnen Komponenten für Wartungs- oder Reparaturarbeiten einfach zugänglich sind.

Eine Aufgabe der Erfindung kann somit darin gesehen werden, eine Ein- oder Auspackmaschine bereitzustellen, die einen unkomplizierten Aufbau besitzt, einfach an unterschiedliche Packprozesse angepasst werden kann und bei welcher einzelne Komponenten für Wartungs- und Reparaturarbeiten besser zugänglich sind. Weiter ist eine Aufgabe der Erfindung darin zu sehen, ein entsprechendes Verfahren mit einer solchen Ein- oder Auspackmaschine bereitzustellen.

Die obige Aufgabe wird mit den Gegenständen gelöst, welche die Merkmale in den unabhängigen Ansprüchen umfassen. Weitere vorteilhafte Ausgestaltungen werden durch die abhängigen Ansprüche beschrieben.

Die Erfindung betrifft eine Ein- oder Auspackmaschine für Getränkebehälter. Bei den Getränkebehältern kann es sich um Getränkeflaschen und insbesondere um Glasflaschen handeln. Auch kann es sein, dass es sich bei den Getränkebehältern um Getränkedosen handelt.

Insbesondere kann die Erfindung eine Auspackmaschine zur Entnahme von Getränkebehältern aus Getränkekisten betreffen.

Die Ein- oder Auspackmaschine umfasst einen Greiferkopfträger mit einer Linearführung und mindestens zwei Greiferköpfen, die an der Linearführung angeordnet sind und jeweils mehrere Greifelemente für Getränkebehälter umfassen. Die mindestens zwei Greiferköpfe können hierbei insbesondere an einer gemeinsamen Linearführung angeordnet sein.

Der Greiferkopfträger kann einen Flanschabschnitt besitzen, über den der Greiferkopfträger an einem Industrieroboter der Ein- oder Auspackmaschine befestigt ist. Bei dem Industrieroboter kann es sich insbesondere um ein Portalsystem, um einen Mehrachsroboter oder um einen weiteren Roboter handeln.

Zudem umfasst die Ein- oder Auspackmaschine einen Antrieb. Der eine Antrieb kann an dem Greiferkopfträger befestigt sein. Bewährt haben sich Ausführungsformen, bei denen der eine Antrieb außermittig am Greiferkopfträger befestigt ist.

Es ist vorgesehen, dass die Ein- oder Auspackmaschine mindestens ein Kopplungsteil umfasst. Der eine Antrieb ist zur Verschiebung eines bestimmten Greiferkopfes entlang der Linearführung ausgebildet. Das mindestens eine Kopplungsteil ist zum mechanischen Verbinden des bestimmten Greiferkopfes mit mindestens einem weiteren Greiferkopf ausgebildet, so dass der bestimmte Greiferkopf den mindestens einen weiteren Greiferkopf bei einer Verschiebung mitnimmt. Somit kann es sein, dass der bestimmte Greiferkopf den mindestens einen weiteren Greiferkopf durch die über das mindestens eine Kopplungsteil hergestellte mechanische Verbindung vor sich herschiebt und/oder hinter sich herzieht, wenn der bestimmte Greiferkopf über den einen Antrieb entlang der Linearführung verschoben wird.

Bewährt haben sich Ausführungsformen, bei denen die Ein- oder Auspackmaschine genau einen Antrieb umfasst, der zur Verschiebung eines bestimmten Greiferkopfes entlang der Linearführung ausgebildet ist. Alternativ oder ergänzend hierzu kann es sein, dass das mindestens eine Kopplungsteil zum mechanischen Verbinden des bestimmten Greiferkopfes mit sämtlichen weiteren Greiferköpfen ausgebildet ist, so dass der bestimmte Greiferkopf sämtliche weiteren Greiferköpfe bei seiner Verschiebung mitnimmt.

Es kann sein, dass der bestimmte Greiferkopf und der mindestens eine weitere Greiferkopf jeweils einen Hebel umfassen, bei dessen Betätigung der bestimmte Greiferkopf und der mindestens eine weitere Greiferkopf an dem mindestens einen Kopplungsteil klemmend fixierbar sind. Denkbar ist hierbei, dass ein jeweiliges Kopplungsteil ein Profil und mehrere Verbindungselemente besitzt. Ein jeweiliges Verbindungselement kann zum Festsetzen eines jeweiligen Greiferkopfes am Profil ausgebildet sein. Die Positionen der Verbindungselemente am Profil zueinander können derart ausgebildet sein, dass sich der bestimmte am Kopplungsteil festgesetzte Greiferkopf und der mindestens eine weitere am Kopplungsteil festgesetzte Greiferkopf in einer relativen Beabstandung zueinander befinden, die auf ein Format von Getränkekisten abgestimmt ist, aus denen mittels der Ein- oder Auspackmaschine im Rahmen eines durchzuführenden Packprozesses Getränkebehälter entnommen oder Getränkebehälter eingesetzt werden sollen.

Die Ein- oder Auspackmaschine kann mindestens eine zur Bewegung von Getränkekisten ausgebildete Horizontalfördereinrichtung umfassen, welche abschnittsweise in einem Arbeitsbereich der mindestens zwei Greiferköpfe verläuft.

Wenn vorliegend ein Format oder unterschiedliche Formate erwähnt werden, so kann hierunter die betragsmäßige Erstreckung einer Getränkekiste entlang einer Transportrichtung der mindestens einen Horizontalfördereinrichtung verstanden werden. So kann es beispielsweise sein, dass in einem ersten Packprozess Getränkekisten über die mindestens eine Horizontalfördereinrichtung bewegt werden, welche eine erste betragsmäßige Erstreckung entlang der Transportrichtung besitzen. In einem nachfolgenden zweiten Packprozess können mittels der mindestens einen Horizontalfördereinrichtungen Getränkekisten über die mindestens eine Horizontalfördereinrichtung bewegt werden, deren betragsmäßige Erstreckung entlang der Transportrichtung gegenüber den bisher im ersten Packprozess bewegten Getränkekisten vergrößert oder verkleinert ist. Wenn von einem ersten Packprozess zu einem zweiten Packprozess gewechselt wird, muss die jeweilige relative Beabstandung der mindestens zwei Greiferköpfe zueinander angepasst werden.

Alternativ oder ergänzend hierzu kann von unterschiedlichen Formaten ggf. auch dann ausgegangen werden, wenn sich die relativen Beabstandungen von Getränkekisten unterscheiden, welche sich auf der mindestens einen zur Bewegung von Getränkekisten ausgebildeten Horizontalfördereinrichtung befinden. So kann es beispielsweise sein, dass aufeinanderfolgende Getränkekisten aneinander anstehen oder dass zwischen aufeinanderfolgenden Getränkekisten bereits eine Beabstandung ausgebildet ist, wenn die Greiferköpfe Getränkebehälter aus Getränkekisten entnehmen oder Getränkebehälter in Getränkekisten einsetzen. Wenn sich die relative Beabstandung zwischen Getränkekisten in einem ersten Packprozess von der relativen Beabstandung zwischen Getränkekisten in einem zweiten Packprozess unterscheidet, so können hierunter unterschiedliche Formate verstanden werden, bei denen die relativen Beabstandungen zwischen benachbarten Greiferköpfen angepasst werden müssen.

Bewährt haben sich Ausführungsformen, bei denen das mindestens eine Kopplungsteil bei einer aufgehobenen klemmenden Fixierung werkzeuglos von der Ein- oder Auspackmaschine abnehmbar ist. Alternativ oder ergänzend hierzu kann es sein, dass das mindestens eine Kopplungsteil wenigstens zwei Rollen ausbildet und dass der Greiferkopfträger mindestens eine Nut bereitstellt, in welche die wenigstens zwei Rollen einsetzbar sind, so dass das mindestens eine Kopplungsteil in eine zum mechanischen Verbinden mit dem bestimmten Greiferkopf vorgesehene Position gerollt werden kann.

Auch kann es sein, dass es sich bei dem mindestens einen Kopplungsteil um mindestens ein Formatteil und insbesondere um mindestens eine Formatleiste handeln. Die Formatleiste kann auf einen durchzuführenden Packprozess abgestimmt sein. Die Formatleiste kann mehrere Verbindungselemente aufweisen, von denen ein jeweiliges Verbindungselement zum Koppeln mit einem jeweiligen Greiferkopf ausgebildet ist. Die Verbindungselemente können derart über die Formatleiste ausgebildet sein, dass sich die Greiferköpfe in solchen Positionen befinden, welche auf einen durchzuführenden Packprozess abgestimmt sind, wenn die Greiferköpfe mit den Verbindungselementen gekoppelt sind. Insbesondere kann die Ein- oder Auspackmaschine mehrere Kopplungsteile umfassen, bei denen es sich um Formatteile und insbesondere um Formatleisten handelt. Jede Formatleiste kann auf einen eigenen durchzuführenden Packprozess abgestimmt sein. Die Formatleisten können jeweils mehrere Verbindungselemente aufweisen, von denen ein jeweiliges Verbindungselement zum Koppeln mit einem jeweiligen Greiferkopf ausgebildet ist. Die Verbindungselemente können über die jeweilige Formatleiste derart ausgebildet sein, dass sich die Greiferköpfe in solchen Positionen befinden, welche auf einen jeweiligen durchzuführenden Packprozess abgestimmt sind, wenn die Greiferköpfe mit den Verbindungselementen gekoppelt sind. Die mehreren Formatleisten können zum selektiven Anordnen am Greiferkopfträger ausgebildet sein.

Die Ein- oder Auspackmaschine kann mindestens eine Sensorik sowie eine Steuereinrichtung umfassen, wobei die Steuereinrichtung über die mindestens eine Sensorik zum Erkennen einer ausgebildeten klemmenden Fixierung eines Greiferkopfes an einem Kopplungsteil ausgebildet ist, welches Kopplungsteil am Greiferkopfträger angeordnet ist. Insbesondere kann es sein, dass die Ein- oder Auspackmaschine eine Steuereinrichtung und für jeden Greiferkopf eine Sensorik umfasst, wobei die Steuereinrichtung über die Sensoriken zum Erkennen von ausgebildeten klemmenden Fixierungen für sämtliche Greiferköpfe an einem Kopplungsteil ausgebildet ist, welches Kopplungsteil am Greiferkopfträger angeordnet ist. Es kann hierbei sein, dass die Steuereinrichtung derart ausgebildet ist, dass sie eine Freigabe für einen über die Ein- oder Auspackmaschine durchzuführenden Packprozess lediglich dann erteilt, wenn sie klemmende Fixierungen am Kopplungsteil für sämtliche Greiferköpfe erkannt hat.

Somit kann die Steuereinrichtung derart ausgebildet sein, dass sie eine Freigabe für einen über die Ein- oder Auspackmaschine durchzuführenden Packprozess unterbindet, wenn sie erkennt, dass eine klemmende Fixierung wenigstens eines Greiferkopfes am Kopplungsteil noch aussteht. Bei solchen Ausführungsformen wird ein Risiko reduziert, dass eine fehlerhafte Fixierung eines Greiferkopfes am Kopplungsteil zu Beschädigungen der Ein- oder Auspackmaschine führen könnte.

Weiter kann die Ein- oder Auspackmaschine eine über den Antrieb bewegbare Kette oder einen über den Antrieb bewegbaren Riemen umfassen, mit dem der bestimmte Greiferkopf zu seiner Verschiebung entlang der Linearführung verbunden ist. Es kann sein, dass die Ein- oder Auspackmaschine eine Umlenkung und insbesondere eine Umlenkrolle umfasst, über welche die Kette oder der Riemen umlaufend geführt ist. Die Kette oder der Riemen kann in diversen Ausführungsformen im Wesentlichen parallel zur Linearführung verlaufen.

Es kann sein, dass die Ein- oder Auspackmaschine ein erstes Kopplungsteil und ein zweites Kopplungsteil umfasst, wobei das erste Kopplungsteil eine erste relative Beabstandung zwischen dem bestimmten Greiferkopf und dem mindestens einen weiteren Greiferkopf festlegt und wobei das zweite Kopplungsteil eine zweite relative Beabstandung zwischen dem bestimmten Greiferkopf und dem mindestens einen weiteren Greiferkopf festlegt, die sich von der ersten relativen Beabstandung unterscheidet. Hierbei kann es sein, dass der bestimmte Greiferkopf und der mindestens eine weitere Greiferkopf selektiv an dem ersten Kopplungsteil oder an dem zweiten Kopplungsteil in der jeweiligen relativen Beabstandung vorzugsweise klemmend fixierbar sind. Bei solchen Ausführrungsformen kann die Ein- oder Auspackmaschine schnell und einfach an unterschiedliche Packprozesse angepasst werden, bei denen aus Getränkekisten mit unterschiedlichen Formaten Getränkebehälter entnommen werden sollen bzw. bei denen in Getränkekisten mit unterschiedlichen Formaten Getränkebehälter eingesetzt werden sollen.

Denkbar ist, dass das erste Kopplungsteil und das zweite Kopplungsteil jeweils einen RFID-Transponder mit einer Identifikationskennzeichnung für das jeweilige Kopplungsteil umfassen. Weiter kann es sein, dass die Ein- oder Auspackmaschine eine RFID Lese- und Auswerteeinheit zum Erkennen der Identifikationskennzeichnung eines RFID-Transponders des jeweiligen Kopplungsteils umfasst, welches am Greiferkopfträger angeordnet ist. Die Ein- oder Auspackmaschine kann eine Steuereinrichtung umfassen, wobei die Auswerteeinheit über die Steuereinrichtung ausgebildet wird und wobei die Steuereinrichtung mit einer RFID-Leseeinheit verbunden ist.

Zudem kann es sein, dass die RFID Lese- und Auswerteeinheit Informationen zu einer Identifikationskennzeichnung eines Koppelungsteils besitzt, welches für einen über die Ein- oder Auspackmaschine durchzuführenden Packprozess benötigt wird. Die RFID Lese- und Auswerteeinheit kann derart ausgebildet sein, dass die RFID Lese- und Auswerteeinheit Hinweise für einen Bediener ausgibt und/oder ein Durchführen des Packprozesses unterbindet, wenn die erkannte Identifikationskennzeichnung nicht mit derjenigen Identifikationskennzeichnung des Kopplungsteils übereinstimmt, welches für den über die Ein- oder Auspackmaschine durchzuführenden Packprozess benötigt wird. Da durch ein jeweiliges Kopplungsteil eine Anpassung der relativen Beabstandungen der Greiferköpfe zueinander vorgegeben wird und da bei solchen Ausführungsformen identifizierbar ist, dass sich ein jeweiliges Kopplungsteil am Greiferkopfträger befindet, welches zum jeweiligen Packprozess passt, kann mit hoher Wahrscheinlichkeit ausgeschlossen werden, dass die Ein- oder Auspackmaschine fehlerhaft angepasst wurde. Hierdurch lässt sich zudem mit hoher Wahrscheinlichkeit ausschließen, dass eine für den durchzuführenden Packprozess nicht geeignete relative Beabstandung von Greiferköpfen zu einer Beschädigung der Ein- oder Auspackmaschine führt. Solche Ausführungsformen erhöhen daher die Sicherheit bei einem Betrieb der Ein- oder Auspackmaschine und vermeiden Beschädigungen der Ein- oder Auspackmaschine, die durch eine fehlerhafte Einstellung der Relativpositionen zwischen Greiferköpfen verursacht werden können.

In diversen Ausführungsformen kann die Ein- oder Auspackmaschine mindestens fünf Greiferköpfe umfassen, die an der Linearführung angeordnet sind und jeweils mehrere Greifelemente für Getränkebehälter umfassen. Es kann sein, dass die Ein- oder Auspackmaschine genau sechs Greiferköpfe umfasst, die an der Linearführung angeordnet sind und jeweils mehrere Greifelemente für Getränkebehälter umfassen. Alternativ oder ergänzend hierzu kann das mindestens eine Kopplungsteil zum mechanischen Verbinden des bestimmten Greiferkopfes mit sämtlichen weiteren Greiferköpfen ausgebildet sein, so dass der bestimmte Greiferkopf sämtliche weiteren Greiferköpfe bei einer Verschiebung mitnimmt.

Die Getränkekisten, von denen im vorliegenden Zusammenhang die Rede ist, können insbesondere durch Kunststoff gebildet sein. Davon abgesehen kommen auch weitere Materialien in Betracht, welche der Fachperson bekannt sind und aus diesem Grunde nicht ausdrücklich erwähnt werden. Es sei aber an dieser Stelle betont, dass die hier so bezeichneten Getränkekisten auch durch Kartonkisten oder andere Umverpackungen oder Sekundärverpackungen gebildet sein können. So wird zwar im vorliegenden Ausführungsbeispiel generell von Getränkekisten gesprochen, was aber nicht ausschließt, dass die gehandhabten Getränkebehälter oder Primärverpackungen auch aus anderen Umverpackungen entnommen oder in andere Umverpackungen hineingegeben werden können. So können die Umverpackungen bspw. durch Kartonkisten o. dgl. Behältnisse gebildet sein, so dass der Begriff der Getränkekiste im vorliegenden Zusammenhang als umfassend verstanden werden soll. Es können unter den hier verwendeten Begriff der Getränkekiste somit auch solche Sekundärverpackungen fallen, die im landläufigen Sinne zwar nicht als Getränkekästen bezeichnet werden, die aber dennoch das Merkmal der Sekundärverpackung oder Umverpackung erfüllen.

Die Erfindung kann zudem ein System zur Handhabung von Getränkebehältern betreffen, welches System eine der vorhergehenden Ausführungsformen einer Ein- oder Auspackmaschine umfasst. Das System kann eine Gruppiereinrichtung sowie eine Transporteinrichtung umfassen, wobei die Gruppiereinrichtung Gruppen aus jeweils mehreren Getränkebehältern bildet und wobei die Transporteinrichtung zum Zuführen der Gruppen an die Einpackmaschine ausgebildet ist. Alternativ oder ergänzend hierzu kann das System einen Schrumpftunnel umfassen, welcher zum Aufschrumpfen einzelner Zuschnitte aus thermoplastischem Verpackungsmaterial auf eine Gruppe aus jeweils mehreren Getränkebehältern ausgebildet ist.

Alternativ oder ergänzend hierzu kann das System eine Klebemaschine umfassen, welche Gebinde aus mehreren Getränkebehältern bildet, indem sie Klebaufträge auf seitliche Mantelflächen von Getränkebehältern aufbringt und Getränkebehälter über die Klebemittelaufträge miteinander in Kontakt bringt. Alternativ oder ergänzend hierzu kann das System eine Maschine zum Aufbringen einer Banderole aus jeweils mehrere Getränkebehälter umfassen.

Alternativ oder ergänzend hierzu kann es sein, dass das System eine Einrichtung zum Bilden von palettierfähigen Lagen aus jeweils mehreren Gebinden umfasst. Diese Einrichtung kann zum Bilden der palettierfähigen Lagen mindestens einen Deltakinematik-Roboter aufweisen. Es kann sein, dass ein Palettierer als Bestandteil des Systems ausgebildet ist, welcher palettierfähige Lagen zu einer Palette verbringt und welcher palettierfähige Lagen auf der Palette absetzt. Zwischen den einzelnen Maschinen und/oder Einrichtungen können sich jeweils Transporteinrichtungen befinden, welche Getränkebehälter von einer ersten Maschine und/oder Einrichtung zu einer zweiten Maschine und/oder Einrichtung bewegen. Auch kann das System einen Speicher umfassen, innerhalb dessen Getränkebehälter und/oder Gebinde temporär aufgenommen werden, bis sie einer erneuten Handhabung zugeführt werden.

Die Ein- oder Auspackmaschine kann eine Steuereinrichtung umfassen, welche zur Ansteuerung des einen Antriebs und/oder zur Betätigung der Greifelemente der mindestens zwei Greiferköpfe ausgebildet ist.

Die Erfindung betrifft zudem ein Verfahren zum Vorbereiten einer Ein- oder Auspackmaschine auf einen durchzuführenden Packprozess. Merkmale, welche vorhergehend bereits zu diversen Ausführungsformen der Ein- oder Auspackmaschine erwähnt wurden, können auch bei den nachfolgenden Ausführungsformen des beschriebenen Verfahrens vorgesehen sein und werden nicht mehrfach erwähnt. Ebenso können die nachfolgenden zu diversen Ausführungsformen des Verfahrens beschriebenen Merkmale bei den vorhergehend bereits beschriebenen Ausführungsformen einer Ein- oder Auspackmaschine vorgesehen sein, ohne erneut erwähnt zu werden.

Die Ausführungsformen der vorhergehend beschriebenen Ein- oder Auspackmaschine können zur Durchführung der nachfolgend beschriebenen Ausführungsformen des erfindungsgemäßen Verfahrens ausgebildet sein. Auch können die nachfolgend beschriebenen Ausführungsformen des erfindungsgemäßen Verfahrens mittels der vorhergehend bereits beschriebenen Ausführungsformen der erfindungsgemäßen Ein- oder Auspackmaschine durchgeführt werden.

Bei dem Verfahren umfasst die Ein- oder Auspackmaschine einen Greiferkopfträger mit einer Linearführung und mindestens zwei Greiferköpfe, die an der Linearführung angeordnet sind und jeweils mehrere Greifelemente für Getränkebehälter aufweisen.

Weiter umfasst die Ein- oder Auspackmaschine einen Antrieb.

Bei dem Verfahren ist vorgesehen, dass vor Durchführen des Packprozesses ein bestimmter Greiferkopf, der über den Antrieb entlang der Linearführung verschiebbar ist, über ein Kopplungsteil mit mindestens einem weiteren Greiferkopf mechanisch verbunden wird, so dass der bestimmte Greiferkopf den mindestens einen weiteren Greiferkopf bei einer Verschiebung entlang der Linearführung mitnimmt. Hierdurch lässt sich die Anzahl an notwendigen Antrieben reduzieren. Einzelne Komponenten der Ein- oder Auspackmaschine sind bei solchen Ausführungsformen besser zugänglich, so dass die Erfindung Vorteile bei der Wartung und Reparatur besitzt.

Es kann sein, dass der bestimmte Greiferkopf und der mindestens eine weitere Greiferkopf jeweils einen Hebel umfassen, wobei die Hebel betätigt und insbesondere umgelegt werden, woraus resultierend der bestimmte Greiferkopf und der mindestens eine weitere Greiferkopf klemmend am Kopplungsteil fixiert werden.

Auch können bei dem Verfahren mindestens eine Sensorik und eine Steuereinrichtung vorgesehen sein. Es kann hierbei sein, dass die Steuereinrichtung über die mindestens eine Sensorik überprüft, ob der bestimmte Greiferkopf und der mindestens eine weitere Greiferkopf klemmend am Kopplungsteil fixiert sind. Die Steuereinrichtung kann eine Information für einen Bediener ausgeben und/oder ein Durchführen des Packprozesses unterbinden, wenn die Steuereinrichtung im Rahmen der Überprüfung feststellt, dass eine klemmende Fixierung des bestimmten Greiferkopfes oder des mindestens einen weiteren Greiferkopfes am Kopplungsteil fehlt. Auch kann es sein, dass die Steuerreinrichtung eine alternative Information für einen Bediener ausgibt und/oder eine Freigabe zum Durchführen des Packprozesses erteilt, wenn die Steuereinrichtung im Rahmen der Überprüfung feststellt, dass sowohl eine klemmende Fixierung des bestimmten Greiferkopfes als auch des mindestens einen weiteren Greiferkopfes am Kopplungsteil ausgebildet ist.

Weiter haben sich Ausführungsformen bewährt, bei denen der bestimmte Greiferkopf bzw. bei denen ausschließlich der bestimmte Greiferkopf an einer Kette oder an einem Riemen befestigt ist, wobei der Antrieb den bestimmten Greiferkopf unter Mitnahme des mindestens einen weiteren Greiferkopfes entlang der Linearführung verschiebt, indem der Antrieb die Kette oder den Riemen bewegt.

Bei dem Verfahren können ein erstes Kopplungsteil und ein zweites Kopplungsteil vorgesehen sein, wobei das erste Kopplungsteil eine erste relative Beabstandung zwischen dem bestimmten Greiferkopf und dem mindestens einen weiteren Greiferkopf vorgibt und wobei das zweite Kopplungsteil eine zweite relative Beabstandung zwischen dem bestimmten Greiferkopf und dem mindestens einen weiteren Greiferkopf vorgibt, die sich von der ersten relativen Beabstandung unterscheidet. Hierbei kann es sein, dass in Abstimmung auf den jeweiligen durchzuführenden Packprozess selektiv das erste Kopplungsteil oder das zweite Kopplungsteil ausgewählt wird, woraufhin der bestimmte Greiferkopf und der mindestens eine weitere Greiferkopf in der vorgegebenen relativen Beabstandung über das ausgewählte Kopplungsteil mechanisch verbunden werden.

Es kann sein, dass das erste Kopplungsteil und das zweite Kopplungsteil jeweils einen RFID-Transponder mit eine Identifikationskennzeichnung für das jeweilige Kopplungsteil umfassen, wobei das erste Kopplungsteil oder das zweite Kopplungsteil an dem Greiferkopfträger angeordnet wird. Hierbei kann es sein, dass die Ein- oder Auspackmaschine die Identifikationskennzeichnung dieses Kopplungsteils ausliest und sodann überprüft, ob sich dieses Kopplungsteil zum Durchführen des Packprozesses eignet. Die Ein- oder Auspackmaschine kann ein Durchführen des Packprozesses unterbinden und/oder Informationen für einen Bediener ausgeben, wenn sie im Rahmen der Überprüfung feststellt, dass das Kopplungsteil zum Durchführen des Packprozesses ungeeignet ist. Auch kann es hierbei sein, dass die Ein- oder Auspackmaschine eine Freigabe zum Durchführen des Packprozesses erteilt und/oder Informationen für einen Bediener ausgibt, wenn sie im Rahmen der Überprüfung feststellt, dass das Kopplungsteil zum Durchführen des Packprozesses geeignet ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ein- oder Auspackmaschine für Getränkebehälter.
Fig. 2 zeigt eine perspektivische Ansicht einer Ausführungsform eines Greiferkopfträgers sowie hieran angeordnete Greiferköpfe, wie sie bei der Ausführungsform einer Ein- oder Auspackmaschine nach Fig. 1 sowie auch in weiteren Ausführungsformen vorgesehen sein können.
Fig. 3 zeigt eine Draufsicht auf die Ausführungsform eines Greiferkopfträgers mit hieran angeordneten Greiferköpfen nach Fig. 2.
Fig. 4 zeigt eine perspektivische Ansicht des Greiferkopfträgers mit hieran angeordneten Greiferköpfen nach Figuren 2 und 3.
Fig. 5 ist eine schematische Detaildarstellung und zeigt weiterer Aspekte des Greiferkopfträgers mit hieran angeordneten Greiferköpfen gemäß Figuren 2 bis 4.
Figuren 6A und 6B zeigen eine Ausführungsform eines Kopplungsteils, wie es für die Ausführungsform einer Ein- oder Auspackmaschine nach Figuren 1 bis 5 sowie auch für weitere Ausführungsformen vorgesehen sein kann.
Fig. 7 zeigt den Greiferkopfträger nach Figuren 2 bis 5 mit einem Ausführungsbeispiel eines am Greiferkopfträger angeordneten Kopplungsteils.
Fig. 8 zeigt einzelne Details des Greiferkopfträgers nach Fig. 7 mit hieran angeordnetem Kopplungsteil.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

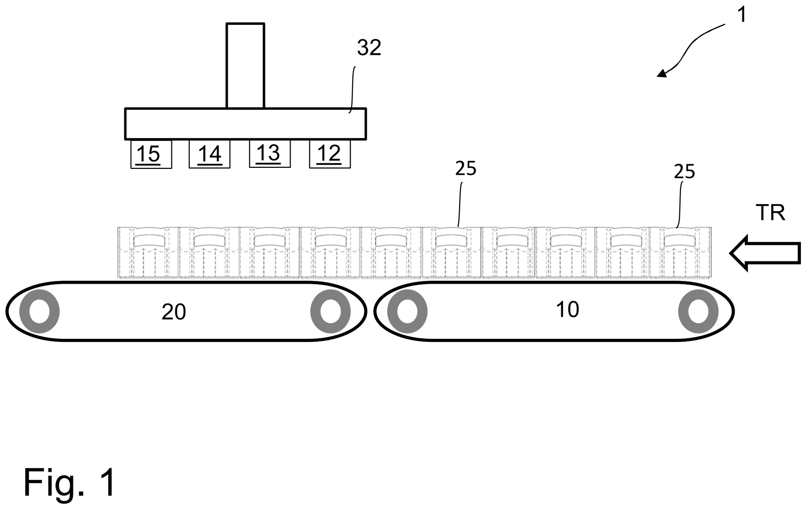

Die Fig. 1 zeigt eine schematische Ansicht einer Auspackmaschine 1 für Getränkebehälter, wobei die Getränkebehälter nicht mit dargestellt sind. Bei den Getränkebehältern kann es sich bspw. um Getränkeflaschen oder um andere Primärverpackungen handeln.

Bestandteile der Auspackmaschine 1 sind eine erste Horizontalfördereinrichtung 10 sowie eine zweite Horizontalfördereinrichtung 20, über die Getränkekisten 25 mit hierin aufgenommenen Getränkebehältern entlang einer Transportrichtung TR bewegt werden, die in Fig. 1 mit einer neben der ersten Transporteinrichtung 10 angetragenen Pfeildarstellung angedeutet ist. Bei den Getränkebehältern handelt es sich um leere Getränkebehälter, welche einer Reinigung zugeführt werden müssen, bevor sie nach einer entsprechenden Reinigung erneut befüllt, verpackt und palettiert werden. Auf der Palette können sie dann zu einem Endabnehmer verbracht werden.

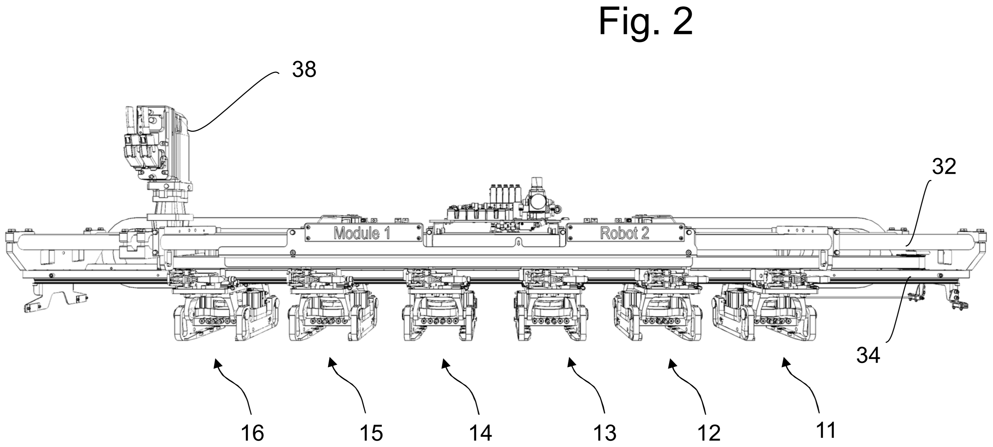

Um die Getränkebehälter aus den Getränkekisten 25 zu entnehmen, umfasst die Auspackmaschine 1 mehrere Greiferköpfe 12, 13, 14 und 15, die an einem Greiferkopfträger 32 angeordnet sind. Die Greiferköpfe 12, 13, 14 und 15 sowie ggf. auch der Greiferkopfträger 32 können einen Aufbau besitzen, wie er in den Figuren 2 bis 5 sowie 7 und 8 dargestellt ist und nachfolgend noch beschrieben wird. In der Praxis kann der Greiferkopfträger 32 über ein Portalsystem der Auspackmaschine 1 getragen und geführt sein. Es ist jedoch auch vorstellbar, dass der Greiferkopfträger 32 mitsamt den hieran angeordneten Greiferköpfen 12, 13, 14 und 15 von einem Mehrachsroboter getragen und geführt ist.

Die Auspackmaschine 1 ist dazu in der Lage, über die Greiferköpfe 12, 13, 14 und 15 zeitgleich mehrere Getränkebehälter aus mehreren Getränkekisten 25 zu erfassen, aus den Getränkekisten 25 zu entnehmen und nach Durchführen einer Transferbewegung auf einem nicht mit dargestelltem Transportband abzusetzen. Ein solches Transportband kann derart positioniert sein, dass hierauf abgesetzte Getränkebehälter zu einer Reinigungsmaschine gelangen. Vor einer Entnahme von Getränkebehältern aus Getränkekisten 25 werden die Greiferköpfe 12, 13, 14 und 15 um einen vorgegebenen Betrag einer Wegstrecke relativ zum Greiferkopfträger 32 entlang der Linearführung 34 (vgl. Fig. 2) bewegt, wobei die Greiferköpfe 12, 13, 14 und 15 ihren relativen Abstand zueinander im Wesentlichen beibehalten.

Jeder Greiferkopf 12, 13, 14 und 15 ist einer eigenen Getränkekiste 25 zugeordnet, aus welcher der jeweilige Greiferkopf 12, 13, 14 bzw. 15 Getränkebehälter entgegennimmt. So werden über den Greiferkopf 12 Getränkebehälter aus einer ersten Getränkekiste 25 entnommen, wobei zeitgleich über den Greiferkopf 13 Getränkebehälter aus einer zweiten Getränkekiste 25 entnommen werden und wobei die Greiferköpfe 14 und 15 zeitgleich Getränkebehälter aus einer dritten und einer vierten Getränkekiste 25 entnehmen. Die Auspackmaschine 1 ist somit dazu in der Lage, zumindest näherungsweise zeitgleich Getränkebehälter aus mehreren Getränkekisten 25 zu entnehmen, wobei die Anzahl der Getränkekisten 25 hierbei der Anzahl an Greiferköpfen 12, 13, 14 und 15 entspricht.

Die Getränkekisten 25 können in der Praxis unterschiedliche Formate besitzen. So können sich Getränkekisten 25 beispielsweise durch ihre Erstreckung entlang derjenigen Transportrichtung TR voneinander unterscheiden, entlang welcher die Horizontalfördereinrichtungen 10 und 20 die Getränkekisten 25 transportieren und welche Transportrichtung TR in Fig. 1 mittels der bereits erwähnten und im Bereich der ersten Horizontalfördereinrichtung 10 angetragenen Pfeildarstellung angedeutet ist. Die Positionen der Greiferköpfe 12, 13, 14 und 15 bzw. deren relative Beabstandungen zueinander passen möglicherweise nicht mehr, wenn zu einem späteren Zeitpunkt Getränkebehälter aus Getränkekisten 25 entnommen werden sollen, deren Format sich von Getränkekisten 25 unterscheidet, aus denen die Auspackmaschine 1 zu einem früheren Zeitpunkt Getränkebehälter entnimmt.

So kann es beispielsweise sein, dass zu einem späteren Zeitpunkt Getränkekisten 25, welche über die Horizontalfördereinrichtungen 10 und 20 transportiert werden, eine größere oder eine kleinere betragsmäßige Erstreckung in Transportrichtung TR besitzen. Auch kann es sein, dass zwischen Getränkekisten 25, welche über die Horizontalfördereinrichtungen 10 und 20 transportiert werden, Lücken ausgebildet sind. In Abhängigkeit des jeweiligen Packprozesses können solche Lücken in Transportrichtung TR größer oder kleiner ausfallen. Eine Anpassung der relativen Beabstandungen der Greiferköpfe 12, 13, 14 und 15 ist aber immer dann notwendig, wenn in unterschiedlichen Packprozessen unterschiedliche Formate umgesetzt werden sollen.

Es sei an dieser Stelle klarstellend darauf hingewiesen, dass zwar im vorliegenden Ausführungsbeispiel generell von Getränkekisten 25 gesprochen wird, dass dies aber nicht ausschließt, dass die gehandhabten Getränkebehälter auch aus anderen Umverpackungen entnommen oder in andere Umverpackungen hineingegeben werden können, die auch als Sekundärverpackungen zur Aufnahme der als Primärverpackungen zu sehenden Getränkebehälter betrachtet werden können. So können die Umverpackungen grundsätzlich auch durch Kartonkisten o. dgl. Behältnisse gebildet sein, so dass der Begriff der Getränkekiste 25 im vorliegenden Zusammenhang als umfassend verstanden werden soll. Es können unter den hier verwendeten Begriff der Getränkekiste 25 somit auch solche Sekundärverpackungen fallen, die im landläufigen Sinne zwar nicht als Getränkekästen bezeichnet werden, die aber das Merkmal der Sekundärverpackung oder Umverpackung erfüllen.

Bei Auspackmaschinen, die aus dem Stand der Technik bekannt sind, ist jedem Greiferkopf 12, 13, 14 und 15 ein eigener Antrieb zugeordnet. Die relativen Beabstandungen der Greiferköpfe 12, 13, 14 und 15 zueinander werden hierbei angepasst, indem die eigenen Antriebe die Greiferköpfe 12, 13, 14 und 15 relativ zueinander verfahren. Auch wenn der vorherig erwähnte gemeinsame Versatz der Greiferköpfe 12, 13, 14 und 15 zusammen mit den entgegengenommenen Getränkebehältern entlang der Transportrichtung TR durchgeführt wird, werden die Greiferköpfe 12, 13, 14 und 15 bei Auspackmaschinen, die aus dem Stand der Technik bekannt sind, über eigene Antriebe verfahren. Solche Auspackmaschinen besitzen einen umständlichen Aufbau. Zudem sind einzelne Komponenten für Wartungs- oder Reparaturarbeiten häufig schwer zugänglich, da die Vielzahl an Antrieben einen Zugang versperrt. Bei der Erfindung und bei den beschriebenen Ausführungsformen sind solche Nachteile zumindest in reduziertem Ausmaß vorhanden.

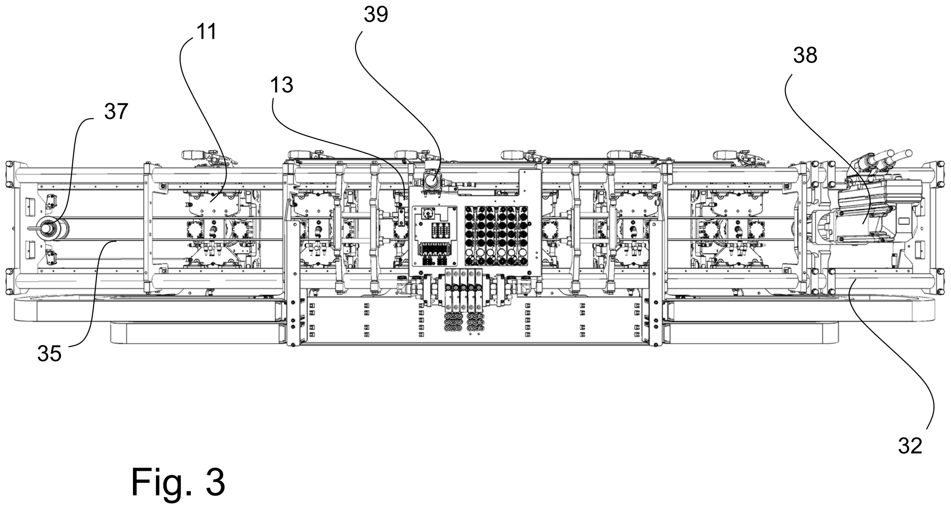

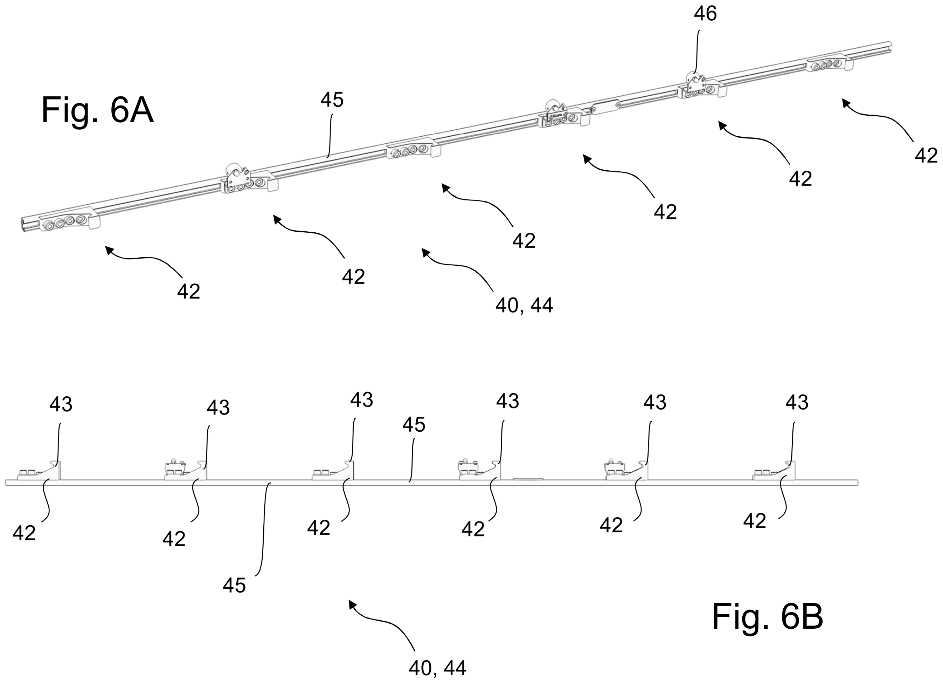

Hierzu sind die Greiferköpfe 12, 13, 14 und 15 an der Linearführung 34 (vgl. Fig. 2) verschiebbar angeordnet. Lediglich ein bestimmter Greiferkopf 13 ist an einen Riemen 35 (vgl. Fig. 3) angebunden, wobei der Riemen 35 über den einen Antrieb 38 (vgl. Figuren 2 und 3) umlaufend bewegt wird, wodurch der eine bestimmte Greiferkopf 13 entlang der Linearführung 34 verschoben wird. Sämtliche weiteren Greiferköpfe 12, 14 und 15 werden lediglich mittelbar über den einen Antrieb 38 bzw. über den Riemen 35 entlang der Linearführung 34 mitverschoben bzw. über den bestimmten Greiferkopf 13 mitbewegt. Der bestimmte Greiferkopf 13 ist hierzu über ein Kopplungsteil 40 (vgl. Figuren 6A und 6B) mit sämtlichen weiteren Greiferköpfen 12, 14 und 15 mechanisch verbunden, wie es nachfolgend noch beschrieben wird. Eine unmittelbare Verbindung der weiteren Greiferköpfe 12, 14 und 15 zum Riemen 35 ist hingegen nicht vorgesehen.

Wenn die Greiferköpfe 12, 13, 14 und 15 Getränkebehälter erfasst haben, wird der Greiferkopfträger 32 zusammen mit den Greiferköpfen 12, 13, 14 und 15 in Richtung nach oben bewegt, wodurch die erfassten Getränkebehälter ihre Getränkekisten 25 verlassen. Hierauf folgend wird der Greiferkopfträger 32 zusammen mit den Greiferköpfen 12, 13, 14 und 15 und den erfassten Getränkebehältern in Richtung eines Transportbandes bewegt, auf welchem die bis dahin erfassten Getränkebehälter abgesetzt werden. Während des Verbringens zum Transportband führen die Greiferköpfe 12, 13, 14 und 15 eine Bewegung relativ zum Greiferkopfträger 32 mit einer Richtungskomponente durch, die sich parallel zur Transportrichtung TR der Horizontalfördereinrichtungen 10 und 20 erstreckt. Zudem wird der Greiferkopfträger 32 zeitgleich mit einer Richtungskomponente bewegt, die in Richtung zur Bildebene verläuft. Hierbei behalten die Greiferköpfe 12, 13, 14 und 15 ihren relativen Abstand zueinander bei. Die gemeinsame Bewegung sämtlicher Greiferköpfe 12, 13, 14 und 15 relativ zum Greiferkopfträger 32 erfolgt weiterhin über den einen einzigen Antrieb 38, wie es nachfolgend noch beschrieben wird. Der bestimmte Greiferkopf 13 wird hierbei durch den Riemen 35 bewegt, wobei die weiteren Greiferköpfe 12, 14 und 15 über ein Kopplungsteil 40 fest mit dem bestimmten Greiferkopf 13 verbunden sind.

Die Fig. 2 zeigt eine perspektivische Ansicht einer Ausführungsform eines Greiferkopfträgers 32 sowie hieran angeordnete Greiferköpfe 11, 12, 13, 14, 15 und 16, wie sie bei der Ausführungsform einer Auspackmaschine 1 nach Fig. 1 sowie auch in weiteren Ausführungsformen vorgesehen sein können. Die Anzahl der Greiferköpfe 11, 12, 13, 14, 15 und 16 der Ausführungsform nach Fig. 2 unterscheidet sich von der Anzahl an Greiferköpfen 12, 13, 14 und 15 nach Fig. 1. Demnach ist die Funktionsweise der vorliegenden Erfindung nicht auf die jeweilige Anzahl an Greiferköpfen 12, 13, 14 und 15 bzw. 11 und 16 beschränkt, sofern ein bestimmter Greiferkopf 13 vorgesehen ist, der über den Antrieb 38 entlang der Linearführung 34 verschoben wird und sofern mindestens ein weiterer Greiferkopf 11, 12, 14, 15 bzw. 16 vorgesehen ist, der mit dem bestimmten Greiferkopf 13 mechanisch verbunden ist, so dass der bestimmte Greiferkopf 13 den mindestens einen weiteren Greiferkopf 11, 12, 14, 15 bzw. 16 bei einer Verschiebung mitnimmt.

Die Fig. 3 zeigt eine Draufsicht auf die Ausführungsform eines Greiferkopfträgers 32 mit hieran angeordneten Greiferköpfen 11, 12, 13, 14, 15 und 16 nach Fig. 2. Fig. 3 zeigt insbesondere die Anordnung des Riemens 35, welcher über den Antrieb 38 umlaufend bewegt wird, um hierdurch den bestimmten Greiferkopf 13 entlang der Linearführung 34 zu verschieben. Der Riemen 35 verläuft im Wesentlichen parallel zur Linearführung 34 und steht mit einer Umlenkung 37 in Kontakt. Bei der Umlenkung 37 handelt es sich um eine Umlenkrolle. Anstelle des Riemens 35 kann beispielsweise auch eine Kette vorgesehen sein, mit welcher der bestimmte Greiferkopf 13 verbunden ist und welche Kette umlaufend angetrieben wird, um hierdurch den bestimmten Greiferkopf 13 entlang der Linearführung 34 zu verschieben. Fig. 3 zeigt zudem eine Verbindungseinrichtung 39. Über die Verbindungseinrichtung 39 ist der bestimmte Greiferkopf 13 an dem Riemen 35 fixiert.

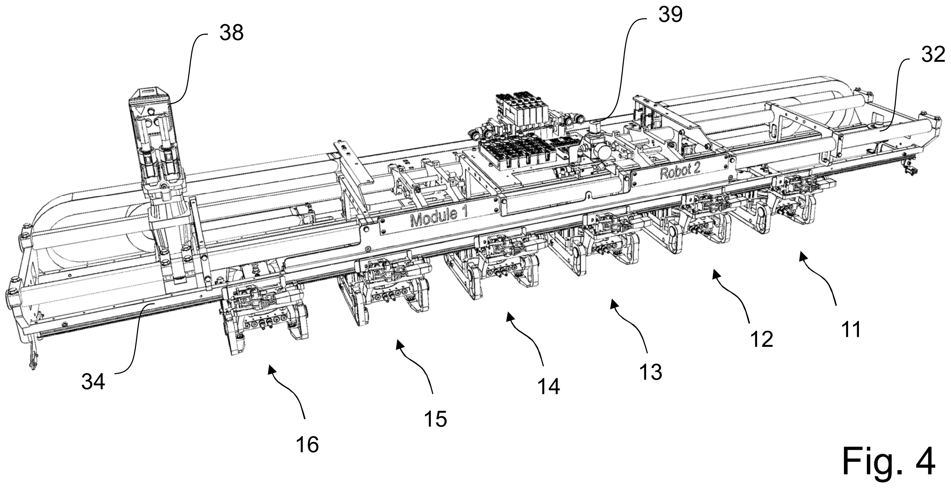

Die Fig. 4 zeigt eine perspektivische Ansicht des Greiferkopfträgers 32 mit hieran angeordneten Greiferköpfen 11, 12, 13, 14, 15 und 16 nach Figuren 2 und 3. Hierbei lässt Fig. 4 erkennen, dass der Antrieb 38 am Greiferkopfträger 32 befestigt ist und dass die Greiferköpfe 11, 12, 13, 14, 15 und 16 hängend an der Linearführung 34 angeordnet sind.

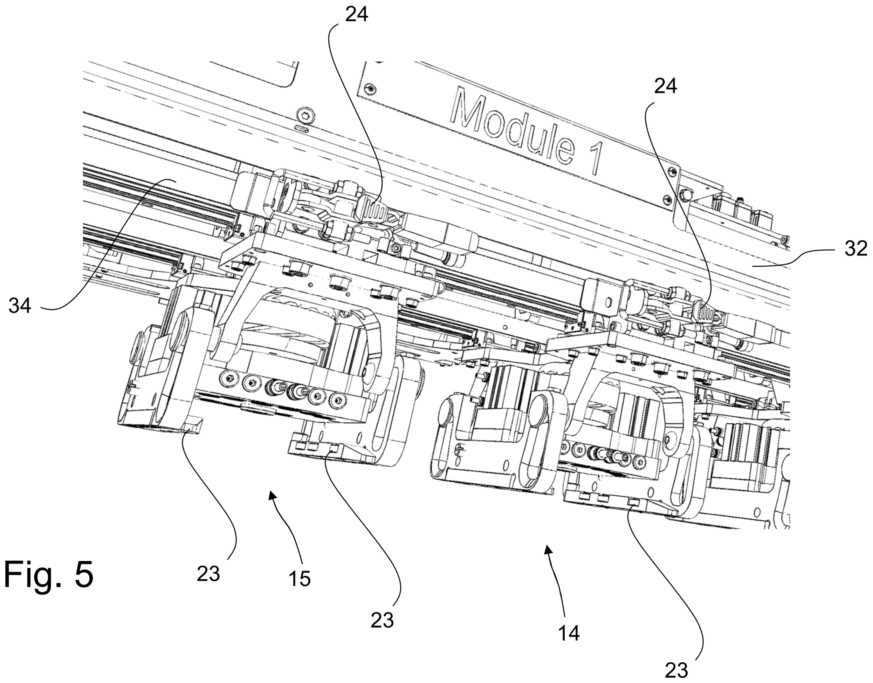

Die Fig. 5 ist eine schematische Detaildarstellung und zeigt weiterer Aspekte des Greiferkopfträgers 32 mit hieran angeordneten Greiferköpfen 11, 12, 13, 14, 15 und 16 gemäß Figuren 2 bis 4. Da Fig. 5 lediglich einzelne Komponenten im Detail zeigt, sind lediglich die Greiferköpfe 14 und 15 zu erkennen.

Jeder Greiferkopf 11, 12, 13, 14, 15 bzw. 16 verfügt über mehrere Greifelemente 23, von denen ein jeweiliges Greifelement 23 zur klemmenden Entgegennahme eines jeweiligen Getränkebehälters ausgebildet ist. Fig. 5 zeigt zudem die Linearführung 34 im Detail. Sämtliche Greiferköpfe 11, 12, 13, 14, 15 bzw. 16 sind an der Linearführung 34 angeordnet und können entlang der Linearführung 34 verschoben werden.

Auch lässt die Fig. 5 erkennen, dass jeder Greiferkopf 11, 12, 13, 14, 15 bzw. 16 einen Hebel 24 besitzt, welcher betätigbar ist, um die Greiferköpfe 11, 12, 13, 14, 15 und 16 an einem Kopplungsteil 40 (vgl. Figuren 6A und 6B) klemmend zu fixieren. Das Kopplungsteil 40 kann mit dem Greiferkopfträger 32 verbunden werden.

Die Figuren 6A und 6B zeigen eine Ausführungsform eines Kopplungsteils 40, wie es für die Ausführungsform einer Ein- oder Auspackmaschine 1 nach Figuren 1 bis 5 sowie auch für weitere Ausführungsformen vorgesehen sein kann. Das Kopplungsteil 40 ist als Formatleiste 44 ausgebildet und umfasst ein Profil 45 sowie mehrere an dem Profil 45 angeordnete Verbindungselemente 42. Für die Greiferköpfe 11, 12, 13, 14, 15 bzw. 16 ist hierbei jeweils ein eigenes Verbindungselement 42 vorgesehen. Die Verbindungselemente 42 bilden jeweils einen Vorsprung 43 aus, wobei die Vorsprünge 43 zur klemmenden Fixierung eines Greiferkopfes 11, 12, 13, 14, 15 bzw. 16 über den jeweiligen Hebel 24 an der Formatleiste 44 dienen.

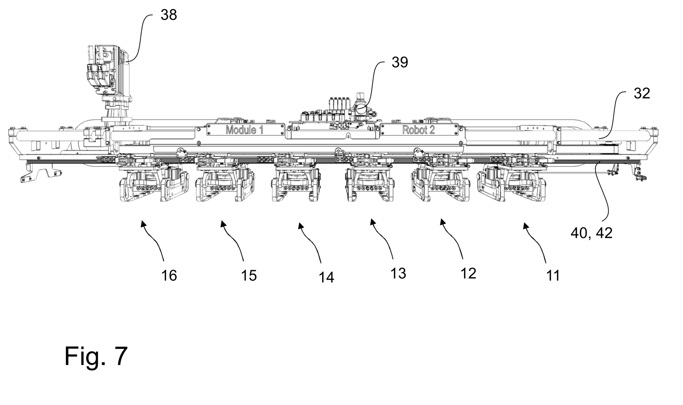

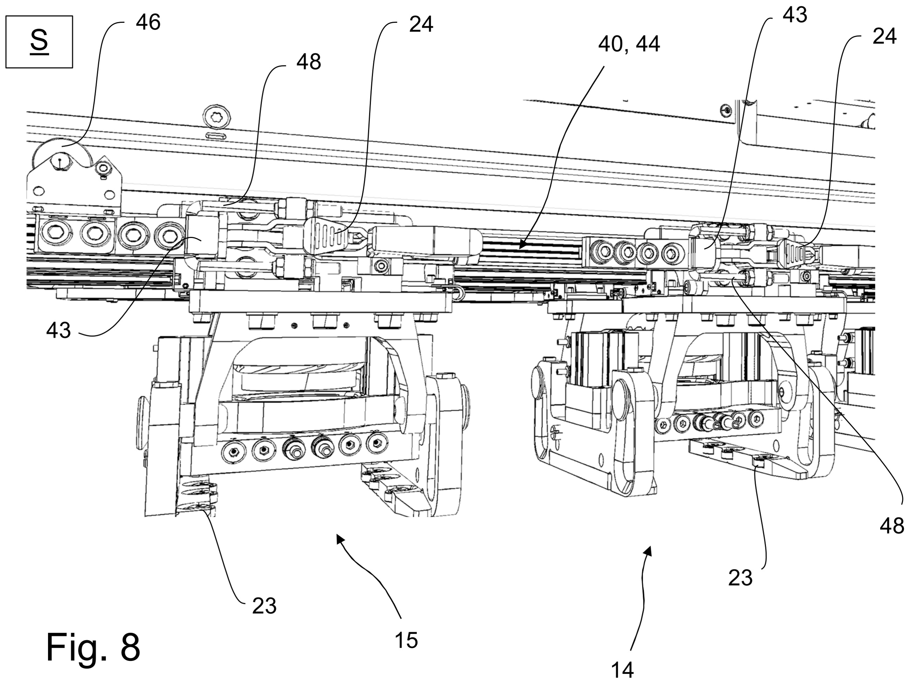

Zudem umfasst das Kopplungsteil 40 einen nicht mit dargestellten RFID-Transponder. Wenn das Kopplungsteil 40 am Greiferkopfträger 32 angeordnet ist (vgl. Figuren 7 und 8) kann eine Steuereinrichtung S (vgl. Fig. 8) über eine Leseeinheit eine auf dem RFID-Transponder hinterlegte Identifikationskennzeichnung erkennen und überprüfen, ob sich das am Greiferkopfträger 32 angeordnete Kopplungsteil 40 zum Durchführen des jeweiligen Packprozesses eignet. Sofern dies nicht der Fall ist bzw. sofern die Steuereinrichtung S bei der Überprüfung feststellt, dass ein alternative Kopplungsteil 40 benötigt wird, um die Greiferköpf 11, 12, 13, 14, 15 und 16 in eine für den Packprozess vorgesehene relative Beabstandung zueinander zu überführen, kann die Steuereinrichtung S eine Durchführen des Packprozesses unterbinden und/oder Informationen hierzu für einen Bediener optisch und/oder akustisch ausgeben.

Die Verbindungselemente 42 sind vorliegend über Schrauben an dem Profil 45 festgesetzt. Hierbei befinden sich die Verbindungselemente 42 in vorgegebenen relativen Beabstandungen zueinander, welche auf Positionen abgestimmt sind, an denen sich die Greiferköpfe 11, 12, 13, 14, 15 bzw. 16 befinden sollen, wenn diese Getränkebehälter aus Getränkekisten im jeweiligen noch durchzuführenden Packprozess entnehmen. Wenn die Greiferköpfe 11, 12, 13, 14, 15 bzw. 16 über ihren jeweiligen Hebel 24 an den Verbindungselementen 42 der Formatleiste 44 festgesetzt sind, befinden sich die Greiferköpfe 11,12, 13, 14, 15 bzw. 16 an solchen Positionen, welche abgestimmt auf das Format einer jeweiligen Getränkekiste 25 passen, um aus den Getränkekisten 25 über die Greiferköpfe 11, 12, 13, 14, 1 und 16 Getränkebehälter entgegennehmen zu können.

In der Praxis umfasst die Auspackmaschine 1 mehrere solche Kopplungsteile 40, wobei in Abstimmung auf das jeweilige Format von Getränkekisten 25, aus denen die Auspackmaschine 1 Getränkebehälter entnehmen soll, eine bestimmte Formatleiste 44 ausgewählt wird und die Greiferköpfe 11, 12, 13, 14, 15 und 16 unter Zuhilfenahme der bestimmten Formatleiste 44 in definierten Positionen angeordnet werden. Die definierten Positionen werden hierbei über die relativen Beabstandungen der Verbindungselemente 42 vorgegeben und sind abgestimmt auf den jeweiligen über die Auspackmaschine 1 durchzuführenden Packprozess.

Die Fig. 7 zeigt den Greiferkopfträger 32 nach Figuren 2 bis 5, wobei an dem Greiferkopfträger 32 nun das Kopplungsteil 40 angeordnet ist, welches in den Figuren 6A und 6B gezeigt und beschrieben wurde. Die Greiferköpfe 11, 12, 13, 15, 15 und 16 sind nun klemmend an den Verbindungselementen 42 des Kopplungsteils 40 fixiert und befinden sich an Positionen, die sich zur Entnahme von Getränkebehältern aus mehreren Getränkekisten 25 eignen, welche Getränkekisten 25 ein bestimmtes und auf die Positionen der Greiferköpfe 11, 12, 13, 14, 15 und 16 abgestimmtes Format besitzen.

Die Fig. 8 zeigt einzelne Details des Greiferkopfträgers 32 nach Fig. 7 mit hieran angeordnetem Kopplungsteil 40. Die Hebel 24 stehen mit einem Bügel 48 in Verbindung, welcher sich im Bereich des Vorsprungs 43 befindet, wenn der jeweilige Greiferkopf 11, 12, 13, 14, 15 und 16 am jeweiligen Verbindungselement 42 festgesetzt wird. Wenn die Auspackmaschine 1 zur Entnahme von Getränkebehältern aus Getränkekisten 25 vorbereitet wird, welche Getränkekisten 25 ein bestimmtes Format besitzen, wird zunächst ein Kopplungsteil 40 aus mehreren Kopplungsteilen 40 ausgewählt, welches den Getränkekisten 25 mit dem jeweiligen Format zugeordnet ist. Der bestimmte Greiferkopf 13 ist mit dem Riemen 35 verbunden, so dass der Steuereinrichtung S die Position des bestimmten Greiferkopfes 13 bekannt ist. Die weiteren Greiferköpfe 11, 12, 14, 15 und 16 werden unter Zuhilfenahme des Kopplungsteils 40 relativ zu diesem bestimmten Greiferkopf 13 ausgerichtet. Hierzu wird zunächst das Kopplungsteil 40 am Greiferkopfträger 32 angeordnet und parallel zur Linearführung 34 verschoben, bis sich ein Verbindungselemente 42 im Nahbereich des bestimmten Greiferkopfes 13 befindet.

Das Kopplungsteil 40 umfasst Rollen 46, die in einer Nut angeordnet sind, so dass das Kopplungsteil 40 parallel zur Linearführung 34 rollen kann, um ein Verbindungselement 42 in den Nahbereich des bestimmten Greiferkopfes 13 zu bringen. Anschließend wird der Bügel 48 des bestimmten Greiferkopfes 13 über den Vorsprung 43 geführt, worauf folgend der Hebel 24 des bestimmten Greiferkopfes 13 umgelegt wird. Über den Bügel 48 sind das Kopplungsteil 40 und der bestimmte Greiferkopf 13 dann klemmend verbunden. Hierauf folgend werden sämtliche weiteren Greiferköpfe 11, 12, 14, 15 und 16 entlang der Linearführung 34 verschoben, bis sich die Greiferköpfe 11, 12, 14, 15 und 16 im Nahbereich eines jeweiligen Verbindungselementes 42 (vgl. Figuren 6A und 6B) des Kopplungsteils 40 befinden.

Jeder Greiferkopf 11, 12, 14, 15 und 16 umfasst einen Bügel 48 und einen Hebel 24, wie es vorhergehend zum bestimmten Greiferkopf 13 bereits beschrieben wurde. Die Bügel 48 werden über die Vorsprünge 43 der Verbindungselemente 42 geführt, woraufhin die Hebel 24 der weiteren Greiferköpf 11, 12, 14, 15 und 16 umgelegt werden, so dass sämtliche Greiferköpfe 11, 12, 14, 15 und 16 über ein jeweiliges Verbindungselement 42 am Kopplungsteil 40 klemmend fixiert und die Greiferköpfe 11, 12, 13, 14, 15, 16 relativ zueinander ausgerichtet sind. Die Greiferköpfe 11, 12, 13, 14, 15 und 16 befinden sich hierbei in einer jeweiligen Position, welche auf das Format von Getränkekisten 25 abgestimmt ist, aus denen über die Greiferköpfe 11, 12, 13, 14, 15 und 16 nachfolgend Getränkebehälter entnommen werden.

Um die Sicherheit des anschließend durchzuführenden Packprozesses zu erhöhen, hat es sich bewährt, wenn eine sensorische Abfrage erfolgt, ob sämtliche Hebel 24 ordnungsgemäß umgelegt worden sind, so dass die Greiferköpfe 11, 12, 13, 14, 15 und 16 klemmend am Kopplungsteil 40 gehalten werden. Wenn die Steuereinrichtung S im Rahmen einer sensorischen Abfrage feststellt, dass sämtliche Hebel 24 ordnungsgemäß umgelegt wurden und dass sämtliche Greiferköpfe 11, 12, 13, 14, 1 und 16 klemmend am Kopplungsteil 40 gehalten sind, kann die Steuereinrichtung S für das Durchführen eines Packprozesses eine Freigabe erteilen.

Die Figuren 1 bis 8 beschreiben vorliegend eine Ausführungsform, welche eine Auspackmaschine 1 betreffen. Es ist jedoch ebenso vorstellbar, dass das beschriebene Prinzip bei einer Einpackmaschine umgesetzt wird, welche Getränkebehälter in Verpackungen einbringt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Auspackmaschine, Einpackmaschine, Ein- oder Auspackmaschine
- 10: Erste Horizontalfördereinrichtung
- 11: Greiferkopf
- 12: Greiferkopf
- 13: Greiferkopf, bestimmter Greiferkopf
- 14: Greiferkopf
- 15: Greiferkopf
- 16: Greiferkopf
- 20: Zweite Horizontalfördereinrichtung
- 23: Greifelement
- 24: Hebel
- 25: Getränkekiste
- 32: Greiferkopfträger
- 34: Linearführung
- 35: Riemen
- 37: Umlenkung
- 38: Antrieb
- 39: Verbindungseinrichtung
- 40: Kopplungsteil
- 42: Verbindungselement
- 43: Vorsprung
- 44: Formatleiste
- 45: Profil
- 46: Rolle
- 48: Bügel
- S: Steuereinrichtung
- R: Transportrichtung

## Patentansprüche

1. Ein- oder Auspackmaschine (1) für Getränkebehälter, umfassend
- einen Greiferkopfträger (32) mit einer Linearführung (34),
- mindestens zwei Greiferköpfe (11, 12, 13, 14, 15, 16), die an der Linearführung (34) angeordnet sind und jeweils mehrere Greifelemente (23) für Getränkebehälter umfassen und einen Antrieb (38),
**dadurch gekennzeichnet, dass**
die Ein- oder Auspackmaschine (1) mindestens ein Kopplungsteil (40) umfasst, wobei
der eine Antrieb (38) zur Verschiebung eines bestimmten Greiferkopfes (13) entlang der Linearführung (34) ausgebildet ist, und wobei das mindestens eine Kopplungsteil (40) zum mechanischen Verbinden des bestimmten Greiferkopfes (13) mit mindestens einem weiteren Greiferkopf (11, 12, 14, 15, 16) ausgebildet ist, so dass der bestimmte Greiferkopf (13) den mindestens einen weiteren Greiferkopf (11, 12, 14, 15, 16) bei einer Verschiebung mitnimmt.

2. Ein- oder Auspackmaschine (1) nach Anspruch 1, bei welcher der bestimmte Greiferkopf (13) und der mindestens eine weitere Greiferkopf (11, 12, 14, 15, 16) jeweils einen Hebel (24) umfassen, bei dessen Betätigung der bestimmte Greiferkopf (13) und der mindestens eine weitere Greiferkopf (11, 12, 14, 15, 16) an dem mindestens einen Kopplungsteil (40) klemmend fixierbar sind.

3. Ein- oder Auspackmaschine (1) nach Anspruch 2, bei dem das mindestens eine Kopplungsteil (40) bei einer aufgehobenen klemmenden Fixierung werkzeuglos von der Ein- oder Auspackmaschine (1) abnehmbar ist.

4. Ein- oder Auspackmaschine (1) nach Anspruch 2 oder Anspruch 3, umfassend mindestens eine Sensorik sowie eine Steuereinrichtung (S), wobei die Steuereinrichtung (S) über die mindestens eine Sensorik zum Erkennen einer ausgebildeten klemmenden Fixierung eines Greiferkopfes (11, 12, 13, 14, 15, 16) an einem Kopplungsteil (40) ausgebildet ist, welches Kopplungsteil (40) am Greiferkopfträger (32) angeordnet ist.

5. Ein- oder Auspackmaschine (1) nach einem der Ansprüche 1 bis 4, bei dem es sich bei dem mindestens einen Kopplungsteil (40) um mindestens ein Formatteil und insbesondere um mindestens eine Formatleiste (44) handelt.

6. Ein- oder Auspackmaschine (1) nach einem der Ansprüche 1 bis 5, umfassend eine über den Antrieb (38) bewegbare Kette oder einen über den Antrieb bewegbaren Riemen (35), mit dem der bestimmte Greiferkopf (13) zu seiner Verschiebung entlang der Linearführung (34) verbunden ist.

7. Ein- oder Auspackmaschine (1) nach einem der Ansprüche 1 bis 6, umfassend ein erstes Kopplungsteil (40) und ein zweites Kopplungsteil (40), wobei das erste Kopplungsteil (40) eine erste relative Beabstandung zwischen dem bestimmten Greiferkopf (13) und dem mindestens einen weiteren Greiferkopf (11, 12, 14, 15, 16) festlegt und wobei das zweite Kopplungsteil (40) eine zweite relative Beabstandung zwischen dem bestimmten Greiferkopf (13) und dem mindestens einen weiteren Greiferkopf (11, 12, 14, 15, 16) festlegt, die sich von der ersten relativen Beabstandung unterscheidet und wobei der bestimmten Greiferkopf (13) und der mindestens eine weitere Greiferkopf (11, 12, 14, 15, 16) selektiv an dem ersten Kopplungsteil (40) oder an dem zweiten Kopplungsteil (40) in der jeweiligen relativen Beabstandung vorzugsweise klemmend fixierbar sind.

8. Ein- oder Auspackmaschine (1) nach Anspruch 7, bei der
- das erste Kopplungsteil (40) und das zweite Kopplungsteil (40) jeweils einen RFID-Transponder mit einer Identifikationskennzeichnung für das jeweilige Kopplungsteil (40) umfassen, und wobei die Ein- oder Auspackmaschine (1)
- eine RFID-Lese- und Auswerteeinheit zum Erkennen der Identifikationskennzeichnung eines RFID-Transponders des jeweiligen Koppelungsteils (40) umfasst, welches am Greiferkopfträger (32) angeordnet ist, und wobei
- die RFID Lese- und Auswerteeinheit Informationen zu einer Identifikationskennzeichnung eines Kopplungsteils (40) besitzt, welches für einen über die Ein- oder Auspackmaschine (1) durchzuführenden Packprozess benötigt wird, und wobei die RFID Lese- und Auswerteeinheit derart ausgebildet ist, dass die RFID Lese- und Auswerteeinheit Hinweise für einen Bediener ausgibt und/oder ein Durchführen des Packprozesses unterbindet, wenn die erkannte Identifikationskennzeichnungen nicht mit derjenigen Identifikationskennzeichnung des Kopplungsteils (40) übereinstimmt, welches für den über die Ein- oder Auspackmaschine (1) durchzuführenden Packprozess benötigt wird.

9. Ein- oder Auspackmaschine (1) nach einem der Ansprüche 1 bis 8, umfassend mindestens fünf Greiferköpfe (11, 12, 13, 14, 15, 16), die an der Linearführung (34) angeordnet sind und jeweils mehrere Greifelemente (23) für Getränkebehälter umfassen, wobei das mindestens eine Kopplungsteil (40) zum mechanischen Verbinden des bestimmten Greiferkopfes (13) mit sämtlichen weiteren Greiferköpfen (11, 12, 14, 15, 16) ausgebildet ist, so dass der bestimmte Greiferkopf (13) sämtliche weiteren Greiferköpfe (11, 12, 14, 15, 16) bei einer Verschiebung mitnimmt.

10. Verfahren zum Vorbereiten einer Ein- oder Auspackmaschine (1) auf einen durchzuführenden Packprozess, welche Ein- oder Auspackmaschine (1)
- einen Greiferkopfträger (32) mit einer Linearführung (34),
- mindestens zwei Greiferköpfe (11, 12, 13,14, 15, 16), die an der Linearführung (34) angeordnet sind und jeweils mehrere Greifelemente (23) für mehrere Getränkebehälter besitzen, und
- einen Antrieb (38) umfasst,
und bei welchem Verfahren vor einem Durchführen des Packprozesses ein bestimmte Greiferkopf (13), der über den Antrieb (38) entlang der Linearführung (34) verschiebbar ist, über ein Kopplungsteil (40) mit mindestens einem weiteren Greiferkopf (11, 12, 14, 15, 16) mechanisch verbunden wird, so dass der bestimmte Greiferkopf (13) den mindestens einen weiteren Greiferkopf (11, 12, 14, 15, 16) bei einer Verschiebung entlang der Linearführung (34) mitnimmt.

11. Verfahren nach Anspruch 10, bei dem der bestimmte Greiferkopf (13) und der mindestens eine weitere Greiferkopf (11, 12, 14, 15, 16) jeweils einen Hebel (24) umfassen, wobei die Hebel (24) betätigt und insbesondere umgelegt werden, woraus resultierend der bestimmte Greiferkopf (13) und der mindestens eine weitere Greiferkopf (11, 12, 14, 15, 16) klemmend am Kopplungsteil (40) fixiert werden.

12. Verfahren nach Anspruch 10 oder Anspruch 11, umfassend mindestens eine Sensorik sowie eine Steuereinrichtung (S), wobei die Steuereinrichtung (S) über die mindestens eine Sensorik überprüft, ob der bestimmte Greiferkopf (13) und der mindestens eine weitere Greiferkopf (11, 12, 14, 15, 16) klemmend am Kopplungsteil (40) fixiert sind, und welche Steuereinrichtung (S) eine Information für einen Bediener ausgibt und/oder ein Durchführen des Packprozesses unterbindet, wenn die Steuereinrichtung (S) im Rahmen der Überprüfung feststellt, dass eine klemmende Fixierung des bestimmten Greiferkopf (13) oder des mindestens eine weiteren Greiferkopfes (11, 12, 14, 15, 16) am Kopplungsteil (40) fehlt.

13. Verfahren nach einem der Ansprüche 10 bis 12, bei welchem der bestimmte Greiferkopf (13) an einer Kette oder an einem Riemen (35) befestigt ist, wobei der Antrieb (38) den bestimmten Greiferkopf (13) unter Mitnahme des mindestens einen weiteren Greiferkopfes (11, 12, 14, 15, 16) entlang der Linearführung (34) verschiebt, indem der Antrieb (38) die Kette oder den Riemen (35) bewegt.

14. Verfahren nach einem der Ansprüche 10 bis 13, bei dem ein erstes Kopplungsteil (40) und ein zweites Kopplungsteil (40) vorgesehen sind, wobei das erste Kopplungsteil (40) eine erste relative Beabstandung zwischen dem bestimmten Greiferkopf (13) und dem mindestens einen weiteren Greiferkopf (11, 12, 14, 15, 16) vorgibt, und wobei das zweite Kopplungsteil (40) eine zweite relative Beabstandung zwischen dem bestimmten Greiferkopf (13) und dem mindestens einen weiteren Greiferkopf (11, 12, 14, 15, 16) vorgibt, die sich von der ersten relativen Beabstandung unterscheidet, und bei welchem Verfahren in Abstimmung auf den jeweiligen durchzuführenden Packprozess selektiv das erste Kopplungsteil (40) oder das zweite Kopplungsteil (40) ausgewählt wird, woraufhin der bestimmte Greiferkopf (13) und der mindestens eine weitere Greiferkopf (11, 12, 14, 15, 16) in der vorgegebenen relativen Beabstandung über das ausgewählte Kopplungsteil (40) mechanisch verbunden werden.

15. Verfahren nach Anspruch 14, bei dem das erste Kopplungsteil (40) und das zweite Kopplungsteil (40) jeweils einen RFID-Transponder mit einer Identifikationskennzeichnung für das jeweilige Kopplungsteil (40) umfassen, wobei das erste Kopplungsteil (40) oder das zweite Kopplungsteil (40) an dem Greiferkopfträger (32) angeordnet wird, und wobei die Ein- oder Auspackmaschine (1) die Identifikationskennzeichnung dieses Kopplungsteils (40) ausliest und sodann überprüft, ob sich dieses Kopplungsteil (40) zum Durchführen des Packprozesses eignet, wobei die Ein- oder Auspackmaschine (1) ein Durchführen des Packprozesses unterbindet und/oder Informationen für einen Bediener ausgibt, wenn sie im Rahmen der Überprüfung feststellt, dass das Kopplungsteil (40) zum Durchführen des Packprozesses ungeeignet ist.
